Europäisches Patentamt

European Patent Office

Office européen des brevets

(19)

(11) Veröffentlichungsnummer: **0 280 767 B1**

(12)

# EUROPÄISCHE PATENTSCHRIFT

(45) Veröffentlichungstag der Patentschrift: **19.02.92**

(21) Anmeldenummer: **87115652.7**

(22) Anmeldetag: **24.10.87**

(51) Int. Cl.⁵: **G06F 13/42**, H04L 12/18, H04L 1/16, G06F 15/16

(54) Verfahren zur Übertragung von Daten.

(30) Priorität: **02.03.87 DE 3706734**

(43) Veröffentlichungstag der Anmeldung:
**07.09.88 Patentblatt 88/36**

(45) Bekanntmachung des Hinweises auf die
Patenterteilung:
**19.02.92 Patentblatt 92/08**

(84) Benannte Vertragsstaaten:
**AT BE CH DE ES FR GB GR IT LI NL SE**

(56) Entgegenhaltungen:
**EP-A- 0 180 299**
**EP-A- 0 181 007**
**DE-A- 3 311 881**
**US-A- 4 342 995**

**PATENT ABSTRACTS OF JAPAN, Band 8, Nr.
65 (P-263)[1502], 27. March 1984; & JP-A-58
213 321 (TATEISHI DENKI K.K.) 12-12-1983**

**IBM TECHNICAL DISCLOSURE BULLETIN,
Band 25, Nr. 3A, August 1982, Seiten
1268-1269, New York, US; M. DENNEAU et al.:
"Scheme for connecting processors
through an open-collector bus"**

(73) Patentinhaber: **FORCE COMPUTERS GmbH
Daimlerstrasse 9
W-8012 Ottobrunn(DE)**

(72) Erfinder: **Jäkel, Hans-Jürgen
Ottobrunner Strasse 20
W-8025 Unterhaching(DE)**

(74) Vertreter: **Patentanwälte Dipl.-Ing. R. Splanemann Dr. B. Reitzner Dipl.-Ing. K. Baronetzky
Tal 13
W-8000 München 2(DE)**

EP 0 280 767 B1

## Beschreibung

Die Erfindung betrifft ein Verfahren gemäß dem Oberbegriff von Anspruch 1 sowie ein Multiprozessor-System gemäß dem Oberbegriff von Anspruch 8.

Aus der EP-181 007-A2 ist es bekannt geworden, bei einem sogenannten Broadcast-Verfahren in einem Multiprozessor-System mit einer sendenden Baugruppe Daten mindestens zwei empfangenden Baugruppen zu übermitteln. Hierzu ist eine entsprechende Bussteuerung vorgesehen. Als Rückmeldesignal wird das Signal XACK verwendet. Durch eine lokale Erzeugung wird dieses normalerweise als Bussignal verwendete Signal simuliert.

Mit einem derartigen System ist es nicht möglich, empfangende Baugruppen gezielt anzusprechen, so daß es auch nicht möglich ist, bei diesen Baugruppen Prozesse bearbeiten zu lassen, die möglichst zum gleichen Zeitpunkt beginnen sollen.

Ferner ist aus Patent Abstracts Bd. Nr. 8, Nr. 65 (P-263) (1502), 27. März 1984 & JP-A-58213321, ein Datenübertragungssystem bekannt, bei welchem eine gemeinsame Bestätigungsrückmeldeleitung vorliegt, die eine Datenübertragung zu den empfangenden Baugruppen, die durch Adreß-Unterscheidungsbaugruppen angesteuert werden, bestätigt. Bei einem derartigen System könnte eine sichere Datenübertragung auch im Broadcastmode nicht verwirklicht werden; ein gemeinsames Starten nahezu zum gleichen Zeitpunkt nach der Art einer Interrupt-Ansteuerung läßt sich jedoch mit diesem System nicht realisieren.

Ferner sind verschiedene Verfahren bekannt geworden, in Systemen mit mindestens einer den Datentransfer initiierenden und mindestens zwei empfangenden Baugruppen die Übertragung von Daten von der den Datentransfer initiierenden zu den empfangenden Baugruppen zu koordinieren und sicherzustellen. Besondere Probleme treten auf, wenn eine empfangende Baugruppe zu einem anderen Zeitpunkt auch als den Datentransfer initiierende Baugruppe und die zuvor den Datentransfer initiierende Baugruppe dann als empfangende Baugruppe auftreten können soll.

Ein derartiges Problem tritt beispielsweise bei Multiprozessor-Systemen auf. Hierbei sind die sogenannten Netzwerksysteme von den echten Multiprozessor-Systemen zu unterscheiden. Bei Netzwerksystemen sind eine Vielzahl unterschiedlicher Lösungen bekannt geworden, von denen das sogenannte CSMA-CD-Verfahren sowie das Token-Passing-Verfahren die bekanntesten sind. Beiden Verfahren ist gemeinsam, daß zur gleichen Zeit je nur eine Baugruppe senden und eine Baugruppe empfangen kann. Aufgrund der Schnelligkeit der Übertragung in dem Netzwerk entsteht der Eindruck einer gleichzeitigen Übertragung, wenn die Zeitanforderungen nicht zu kritisch sind. Beim CSMA-CD-Verfahren wird von der sendewilligen Baugruppe zunächst geprüft, ob keine andere Übertragung stattfindet. Wenn die Übertragungswege frei sind, beginnt sofort das Senden. Wenn es dennoch zu einer Kollision zwischen zwei Übertragungen kommt, werden beide Übertragungen abgebrochen und ein neuer Versuch gestartet. Der Zeitpunkt, zu welchem die Übertragung erneut versucht wird, wird durch einen Zufallszahlengenerator festgelegt. Dadurch soll die Wahrscheinlichkeit, daß erneut eine Kollision stattfindet, vermindert werden. Beim Token-Passing-Verfahren wird ein definierters Bit-Muster von einer Baugruppe zur nächsten weitergereicht. Eine Baugruppe, die senden will, übernimmt das Token und bezeichnet damit den Übertragungsweg als belegt. Die zu übertragenden Daten werden an das Token angehängt und einer empfangenden Baugruppe zugeleitet. Das Token wird innerhalb eines vorgegebenen Zeitrasters von Baugruppe zu Baugruppe weitergeleitet.

Diese Verfahren sind bei den genannten echten Multiprozessor-Systemen, die in der Regel räumlich fest miteinander verbunden sind, nicht anwendbar, da sie zu einem im Echtzeitbereich kritischen Zeitverhalten führen können. Ferner müssen aufwendige Maßnahmen ergriffen werden, wenn zwei Baugruppen, die beispielsweise aus Eingabe/Ausgabe-Bausteinen oder aus Prozessorbausteinen bestehen können, zugleich die vorliegenden Daten übernehmen sollen. Üblicherweise wird daher mit zeitversetzten Übertragungen gearbeitet, wobei die eigentliche Übertragungssteuerung beispielsweise durch einen Baustein für den direkten Speicherzugriff, einen sogenannten DMA-Baustein, durchgeführt wird. Ferner ist es bekannt, zur Vermeidung von Kollisionen bei mehreren sendewilligen Baugruppen in echten Multiprozessor-Systemen sogenannte Bus-Arbiter-Bausteine einzusetzen.

Ein weiteres Problem besteht darin, daß die empfangende Baugruppe nicht zu jedem Zeitpunkt Daten aufnehmen kann. Daher muß eine Prüfung auf Übertragungsfehler vorgenommen werden. Eine Lösung dieses Problems kann beispielsweise darin bestehen, die Übertragung je interruptgesteuert durchzuführen. Bei Systemen mit mindestens zwei Prozessoren erfordert dies jedoch, daß bereits die sehr hardwarenahe Software wiedereintrittsfähig oder reentrant sein muß, was einen erhöhten Programmieraufwand erfordert. Zudem sind die möglichen Interrupt-Leitungen in der Regel begrenzt. Wenn mehr Baugruppen zugleich empfangen können sollen, als Interrupts vorgesehen sind, ist dieses Verfahren daher nicht mehr anwendbar.

Ferner ist aus dem Buch von Andrew S. Tannenbaum: Structured Computer Organization, Englewood Cliffs, New Jersey; Prentice-Hall Inc., 1984, s. insbesondere Seiten 103 bis 110, sowie aus dem Buch von Walter A. Triebel und Avtar Singh: 16 Bit Microprocessors, Englewood Cliffs, New Jersey; Prentice-Hall Inc., 1985, s. Seiten 317 bis 339, ein verfahren gemäß dem Oberbegriff von Anspruch 1 sowie ein Prozessor-System bekannt, bei welchem eine einen Datentransfer initiierende Baugruppe je einzeln adressierbaren empfangenden Baugruppen Daten zuleitet, wobei die Datenübertragung über ein Rückmeldesignal bestätigt wird. Die Adressierung der empfangenden Baugruppen muß jedoch zu unterschiedlichen Zeitpunkten erfolgen, da es sonst zu Buskollisionen kommt.

Demgegenüber ist es Aufgabe der Erfindung, ein Verfahren gemäß dem Oberbegriff von Anspruch 1 sowie ein Multiprozessor-System gemäß dem Oberbegriff von Anspruch 8 zu schaffen, die einen einfachen Aufbau ermöglichen, betriebssicher sind und dennoch die parallele Übertragung von Daten zu verschiedenen empfangenden Baugruppen, auch in zeitkritischen Anwendungen, ermöglichen.

Diese Aufgabe wird erfindungsgemäß durch Anspruch 1 bzw. durch Anspruch 8 gelöst. Vorteilhafte Weiterbildungen ergeben sich aus den Unteransprüchen.

Mit der erfindungsgemäßen Maßnahme, daß zugleich mehrere empfangende Baugruppen angesteuert werden können, ergibt sich der Vorteil, daß die Übertragung wirklich zum gleichen Zeitpunkt bei allen empfangenden Baugruppen stattfindet. Dies bietet besondere Vorteile, wenn verschiedene Prozessoren aufeinander synchronisiert werden sollen, denn dann entsteht nicht bereits aufgrund der Übertragung der Eingabedaten ein Zeitversatz.

Erfindungsgemäß erfolgt die Überprüfung der Übertragung mittels des Rückmeldesignals DTACK. Dieses Signal ist bei jeder empfangenden Baugruppe als Ausgangssignal und bei jeder den Datentransfer initiierenden Baugruppe zusätzlich als Eingangssignal vorgesehen. Erfindungsgemäß werden nun die Rückmeldesignale einfach aufeinandergelegt. Hierbei können auch die gemäß verschiedenen Bus-Spezifikationen möglichen Tri-State-Treiberschaltkreise zur Anwendung kommen. Besonders vorteilhaft ist jedoch die Anwendung von - beispielsweise gemäß der VME-Bus-Spezifikation erlaubten - Open-Collector-Treiberschaltkreisen. Diese ermöglichen es, daß die den Datentransfer initiierende Baugruppe einen Fehler festzustellen vermag, sofern irgendwo ein Übertragungsfehler vorliegt.

Durch das Aufeinanderlegen der Rückmeldesignale ergibt sich aufgrund der verwendeten Technik eine logische Verknüpfung.

Das Rückmeldesignal ist innerhalb des Zeitrasters der synchronisierten Übertragung vorgesehen. Insbesondere beim Lesen von zusammenhängenden Datenblöcken lassen sich so hohe Geschwindigkeiten erzielen. Die Identifizierung der empfangenden Baugruppe, bei der ein Übertragungsfehler stattgefunden hat, erfolgt über ein Fehlersignal Bus Error (BERR), wobei die Adresse des aufgetretenen Fehlers automatisch in einem Zwischenspeicherregister der übertragungsfehlerbehafteten Baugruppe abgelegt werden kann, so daß die den Datentransfer initiierende Baugruppe nur die fehlerhafte Übertragung wiederholen muß. Dieses Zwischenspeicherregister muß von der den Datentransfer initiierenden Baugruppe lesbar sein. Besonders vorteilhaft ist ferner die Synchronisierung des Rückmeldesignals DTACK gegenüber einem Datentakt DS, wobei auch die Möglichkeit besteht, den Datenbus im Multiplexverfahren zu betreiben, so daß beispielsweise zwei Datentakte DSA und DSB bestehen. Das erfindungsgemäße System weist ferner eine Toleranz gegenüber Laufzeitunterschieden im Bereich der Datensignale auf, so daß es auch möglich ist, mit einem gemultiplexten Datenbus zu arbeiten, wobei die aufgrund des Demultiplexens entstehenden Laufzeitunterschiede sich nicht negativ bemerkbar machen.

Ferner sind auch Datentaktsignale trotz eines festgelegten Zeitrahmens innerhalb einer bestimmten Streuungsbandbreite tolerierbar.

Die Daten werden spätestens 40 ns, nachdem das Datentaktsignal DS eingeschaltet wurde, übernommen. Wenn die Decodierung zu einem positiven Ergebnis führt, wird das Rückmeldesignal DTACK abgegeben, jedoch nicht früher als 200 ns nach dem Datentaktsignal DS.

Wenn keine erfolgreiche Übertragung stattgefunden hat, muß das Fehlersignal BERR abgegeben worden sein und die Zugriffsadresse in einem von der den Datentransfer initiierenden Baugruppe lesbaren Speicher gespeichert werden. Dies muß spätestens 150 ns nach dem Datentaktsignal DS erfolgen, damit noch eine ausreichende Sicherheitsreserve gegenüber dem frühestmöglichen Rückmeldesignal DTACK besteht.

Die den Datentransfer initiierende Baugruppe kann ferner ein Adreßsignal abgeben, mit dem eine Unterscheidung zwischen unterschiedlichen Prioritäten der zu übertragenden Daten steuerbar ist.

Weitere Einzelheiten, Merkmale und Vorteile werden in der nachfolgenden Beschreibung eines Ausführungsbeispiels anhand der Zeichnung näher erläutert.

Darin zeigen:

Fig. 1     ein Prinzipschaltbild eines für die Ausführung des erfindungsgemäßen Verfahrens geeigneten Computers und

Fig. 2     eine Darstellung des Zeitdiagramms der für das erfindungsgemäße Verfahren verwendeten Signale bei einem einfachen Lesezyklus.

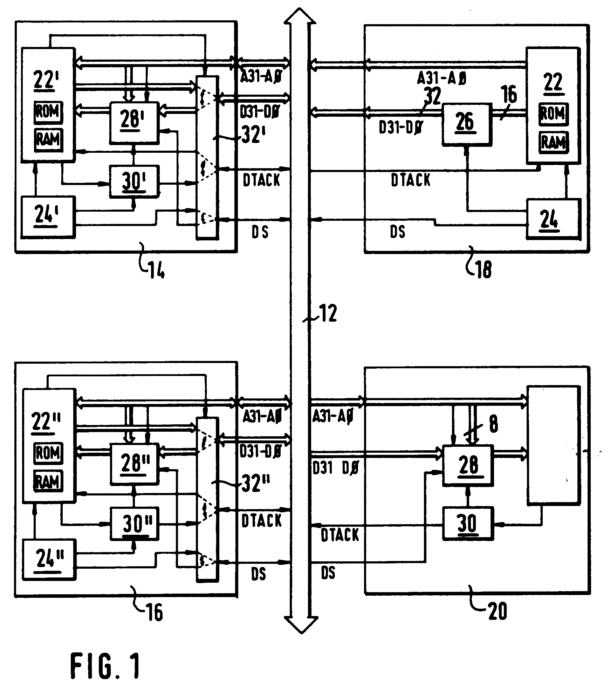

In Fig. 1 ist ein Computer 10 in seinen für die Erfindung relevanten Teilen dargestellt. Der Computer ist um einen Bus 12 herum aufgebaut, der eine leitende Verbindung zwischen den unterschiedlichen Baugruppen des Computers herstellt. An den Bus 12 ist eine Baugruppe 14 angeschlossen, die sowohl für den Sende- als auch für den Empfangsbetrieb geeignet ist. Eine weitere, der Baugruppe 14 entsprechende Baugruppe 16 ist ebenfalls an den Bus 12 angeschlossen. In dem in Fig. 1 dargestellten Ausführungsbeispiel ist die Baugruppe 14 die den Datentransfer initiierende Baugruppe und die Baugruppe 16 empfangende Baugruppe. Die den Datentransfer initiierende Baugruppe wird im folgenden als sendende Baugruppe bezeichnet. Eine weitere Baugruppe 18 ist nur als sendende Baugruppe ausgelegt und ist in dem in Fig. 1 dargestellten Zustand nicht aktiv. Eine weitere Baugruppe 20 ist nur als empfangende Baugruppe ausgelegt. Diese Baugruppe 20 empfängt zugleich mit der Baugruppe 16 die von der Baugruppe 14 abgegebenen Datensignale.

In der praktischen Ausführung wird der Bus 12 durch eine Mutterplatine gebildet, die 21 Einschubmöglichkeiten für die je als Einsteckplatine ausgebildeten Baugruppen aufweist. Damit können bei einem derartigen System maximal eine sendende und 20 empfangende Baugruppen verwendet werden.

Die für den Sendebetrieb ausgelegte Baugruppe 18 weist die Minimalkonfiguration auf, nämlich eine Steuereinheit 22, beispielsweise einen Mikroprozessor, der mit den Adreßleitungen A31 bis A0, mit den Datenleitungen D31 bis D0, mit einer Rückmeldeleitung DTACK und mit dem Datentakt DS verbunden ist. Alle diese Leitungen werden über den Bus 12 geführt und stehen jeder Baugruppe zur Verfügung. Die zeitliche Abfolge der einzelnen Signale auf diesen Leitungen wird durch einen Taktgenerator 24 gesteuert, wobei der Taktgenerator einen Multiplexbaustein 26 ansteuert, der wechselnd die höherwertige und die niederwertige Hälfte der Datenleitungen mit der Steuereinheit 22 verbindet. Der Taktgenerator 24 gibt synchronisiert mit der Umschaltung des Multiplexbausteines 26 den Datentakt ab, der über den Bus 12 zu den empfangenden Baugruppen gelangt. Ferner ist die Rückmeldeleitung unmittelbar mit der Steuereinheit 22 verbunden. Über die Rückmeldeleitung gelangt das Rückmeldesignal DTACK zu der Steuereinheit 22.

Die Steuereinheit 22 ihrerseits weist einen an sich üblichen Aufbau auf, wobei neben der eigentlichen Steuereinheit, dem Mikroprozessor, ein Schreib/Lese-Speicher und ein Festwertspeicher vorgesehen sind. Neben den in Fig. 1 dargestellten Steuerleitungen können eine Mehrzahl weiterer Steuerleitungen sowie Eingabe/Ausgabeleitungen für den Anschluß von Peripheriegeräten vorgesehen sein, die mit der Steuereinheit in Verbindung stehen.

Die Baugruppe 20 ist als Nur-Empfangs-Baugruppe ausgelegt. In dem dargestellten Ausführungsbeispiel ist ein Zwischenspeicher 28 vorgesehen, der die Form eines 32 Bit breiten Schieberegisters hat. Das bedeutet, daß die zuerst in den Zwischenspeicher 28 gelangenden Daten diesen auch zuerst verlassen. Die von dem Zwischenspeicher 28 abgegebenen Daten werden weiterverarbeitet, wobei die weiterverarbeitende Einheit über eine Übernahmelogik 30 das Weiterschieben der Daten in dem Zwischenspeicher 28 nur dann zuläßt, wenn sie die abgegebenen Daten aufnehmen kann. Die Übernahmelogik 30 gibt ferner das Rückmeldesignal DTACK ab. An dem Zwischenspeicher 28 ist ferner der Datentakt DS angeschlossen, der den Zeitpunkt der Datenübernahme festlegt. Die Aktivierung einer empfangenden Baugruppe erfolgt über die Adreßleitungen, wobei eine Adreßleitung für die Aktivierung des Zwischenspeichers - und in nicht dargestellter Form der Aktivierung der zugehörigen weiterverarbeitenden Einheit - dient.

Die Adreßleitung, die für die Aktivierung verwendet wird, ist baugruppenspezifisch. Das bedeutet, daß jeder Baugruppe eine andere Adreßleitung für die Aktivierung zugeteilt ist. Damit kann die je sendende Baugruppe festlegen, welche Baugruppen bestimmte Daten gleichzeitig empfangen sollen. Bei 21 möglichen Baugruppen sind demnach 21 Adreßsignale für die Adressierung der einzelnen Baugruppen erforderlich.

In einer Alternative der in Fig. 1 dargestellten Ausführungsform der Baugruppe 20, die schematisch innerhalb der Baugruppe 16 angedeutet ist, ist der Zwischenspeicher 28 nicht als Schieberegister, sondern als adressierbarer Speicherbaustein ausgebildet, wobei 8 Adreßleitungen, die nicht für die Adressierung der Baugruppen verwendet werden, zur Adressierung des Zwischenspeichers 28 dienen. Der Zwischenspeicher kann hier zugleich als schneller Zwischenspeicher für die Steuereinheit 22, als sogenannter Cache-Speicher, verwendet werden.

Die Baugruppe 16 weist sowohl die Bauteile der sendenden Baugruppe 18 als auch die der empfangenden Baugruppe 20 auf und eignet sich sowohl für den Sende- als auch für den Empfangsbetrieb. Ein Zwischenspeicher 28′ ist mit 8 Adreßleitungen verbunden, die von den die Baugruppen adressierenden Adreßleitungen verschieden sind, sowie mit einer Adreßleitung, die der Baugruppenadresse der Baugruppe 16 entspricht. Die Umschaltung der Datenleitungen D31 bis D0, der Rückmeldeleitung DTACK und des Datentakts DS vom Sende- auf den Empfangsbetrieb und zurück ist durch einen Umschalter 32′ schematisch ange-

deutet. In der Darstellung gemäß Fig. 1 wird der Umschalter von der Steuereinheit 22' gesteuert. Im Sendebetrieb erfolgt die Taktsteuerung durch einen Taktgenerator 24', der in einer der Baugruppe 18 entsprechenden Weise verschaltet ist. In der dargestellten Ausführungsform der Baugruppe 16 ist kein Multiplexbetrieb für die Datenleitungen vorgesehen.

In der Sende-Betriebsart ist der Datenbus der Steuereinheit 22' über den Umschalter 32' unmittelbar mit dem Bus 12 verbunden. Ferner ist ein Ausgang des Taktgenerators 24' mit dem Datentakt DS auf dem Bus 12 verbunden. In diesem Betriebszustand wird ferner das auf dem Bus 12 anliegende Rückmeldesignal DTACK über den Umschalter 32' unmittelbar der Steuereinheit 22' zugeleitet. In der Empfangs-Betriebsart befindet sich der Umschalter 32 in der in Fig. 1 schematisch angedeuteten, unteren Stellung. Dann werden die auf den Datenleitungen D31 bis D0 anliegenden Daten dem Zwischenspeicher 28' zugeleitet. Die Steuerung der Übernahme erfolgt in der in Verbindung mit der Baugruppe 20 beschriebenen Weise über die Übernahmelogik 30' und den Datentakt DS.

Die Baugruppe 14 weist einen der Baugruppe 16 entsprechenden Aufbau auf, wobei entsprechende Bauteile mit entsprechenden Bezugszeichen versehen sind.

Die Übernahmelogik 30 und der dem Ausgang der Übernahmelogiken 30' und 30" entsprechende Ausgang der Umschalter 32' und 32" sind je als Open-Collector-Ausgänge ausgebildet. Dadurch ist es möglich, die Rückmeldeleitungen aller empfangenden Baugruppen auf dem Bus 12 galvanisch miteinander zu verbinden.

Zu den nicht dargestellten Steuerleitungen gehört auch das Fehlersignal BERR. Dieses Signal wird asynchron zu dem dargestellten Aufbau von der empfangenden Baugruppe dann ausgelöst, wenn deren Empfangslogik einen Fehler feststellt. Das Fehlersignal wird von der sendenden Baugruppe erfaßt, diese wiederholt die Übertragung dann zu einem späteren Zeitpunkt.

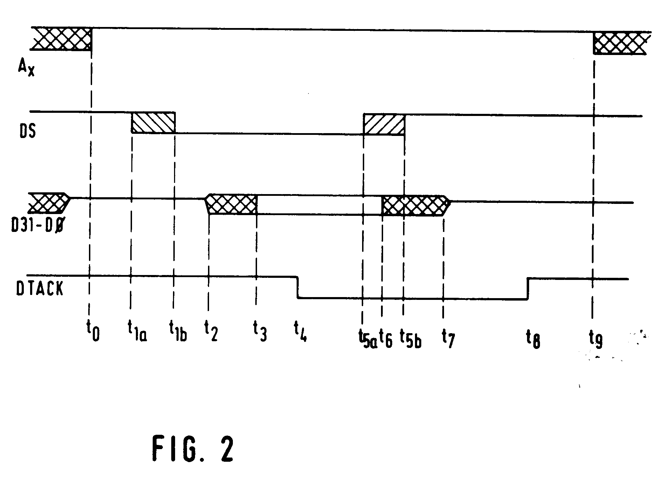

Bei dem in Fig. 2 dargestellten Zeitdiagramm wird zu einem ersten Zeitpunkt t0 von der sendenden Baueinheit das Adreßsignal für die jeweilige empfangende Baugruppe erzeugt. Frühestens 35 ns nach der Erzeugung des Adreßsignales wird der Datentakt DS von der sendenden Baugruppe abgegeben, beispielsweise zum Zeitpunkt t1a. In dem Fall, daß in einem gemultiplexten Datenbussystem verschiedene Datentakte abgegeben werden, kann der zweite Datentakt beispielsweise zum Zeitpunkt t1b abgegeben werden, wobei bei der sendenden Baueinheit die zeitliche Versetzung zwischen dem frühesten und dem spätesten Datentakt, also die Zeitdauer zwischen dem Zeitpunkt t1a und dem Zeitpunkt t1b nicht mehr als 10 ns und für die empfangende Baueinheit einschließlich etwaiger Gatterlaufzeiten nicht mehr als 20 ns betragen sollte.

Zugleich oder kurze Zeit nach dem Anliegen des Datentaktes geraten die Datenleitungen D0 bis D31 zum Zeitpunkt t2 in einen aktivierten Zustand, zum Zeitpunkt t3 nehmen die Datenleitungen den von der sendenden Baugruppe vorgegebenen Zustand an. Ab diesem Zeitpunkt kann der auf der Datenleitung liegende Wert von der empfangenden Baugruppe übernommen werden. Zum Zeitpunkt t4 gibt die empfangende Baugruppe ein Rückmeldesignal DTACK dahingehend ab, daß die Übertragung stattgefunden hat. Dies darf nicht früher als 200 ns nach dem Anliegen des Datentaktes DS zum Zeitpunkt t1a bzw. t1b der Fall sein.

Für den Fall, daß eine Übertragung nicht erfolgreich war - sei es, weil ein Speicherüberlauf bei einer empfangenden Baugruppe vorlag, sei es aus anderen Gründen -, gibt die betreffende empfangende Baugruppe das Fehlersignal BERR ab. Dies erfolgt innerhalb von 150 ns nach dem Datentakt DS, so daß ein Fehler in jedem Fall erkannt werden kann.

Zum Zeitpunkt t5a kann dann der Datentakt DS wieder abgeschaltet werden. Dies darf nicht erfolgen, bevor das Rückmeldesignal abgegeben wird. Ein etwaiges weiteres Datentaktsignal kann zum Zeitpunkt t5b abgeschaltet werden; ebenfalls jedoch nicht vor dem Zeitpunkt t4.

Unmittelbar nach dem Abschalten des Datentakts DS zum Zeitpunkt t5a können die Datensignale auf den Datenleitungen D31 bis D0 zum Zeitpunkt t6 einen beliebigen Wert annehmen. Zum Zeitpunkt t7 können die Datenleitungen dann einen undefinierten Zustand annehmen. Wenn es sich also bei den Bustreibern um Tri-State-Schaltkreise handelt, können diese abgeschaltet werden. Dieser Zeitpunkt t6 kann vor oder nach dem Zeitpunkt t5b, zu welchem der Datentakt DS abgeschaltet wird, liegen. Nach dem Abschalten des Datentaktes zum Zeitpunkt t5b kann auch das Rückmeldesignal DTACK zum Zeitpunkt t8 wieder abgeschaltet werden. Gleiches gilt für das Adreßsignal, wobei jedoch zwischen dem Abschalten des Datentaktes zum Zeitpunkt t5b und dem Zeitpunkt t9, zu welchem das Adreßsignal abgeschaltet wird, die sendende Baugruppe mindestens 10 ns warten sollte.

Die vorliegende Erfindung läßt sich besonders vorteilhaft bei einem Multiprozessorsystem einsetzen, wobei sowohl gleichartige als auch ungleichartige Prozessoren zum Einsatz kommen können. Besonders vorteilhaft lassen sich mehrere gleichartige Prozessoren aufeinander synchronisieren. Beispielsweise können exakt zum gleichen Zeitpunkt Interrupts auf empfangenden Baugruppen ausgelöst werden, so daß die je von den empfangenden Baugruppen durchgeführten Aktionen völlig parallel zueinander ablaufen. Hierdurch läßt es sich vermeiden, daß ein Zeitversatz zwischen der ersten und letzten adressierten Baugruppe auftritt, der bislang für die Durchführung der mehreren Buszyklen erforderlich war, die für die Datenübertragung je auf eine empfangende Baugruppe notwendig waren.

Bei zwanzig empfangenden Baugruppen können so beispielsweise die für die Datenübertragung bisher erforderlichen über hundert Buszyklen eingespart werden.

Während zudem bislang bei der sequentiellen Datenübertragung die Anzahl der verschiedenen Interrupts die maximale Anzahl von empfangenden Baugruppen für die Datenübertragung im vorliegenden Sinne bestimmte (beispielsweise sieben bei dem Mikroprozessor 68 020), ist diese Beschränkung mit der Erfindung aufgehoben.

Eine weitere Anwendung besteht in der Statuskoordination verschiedener Prozessoren in einem Multiprozessorsystem. Bislang wurden Status-Bits im globalen Speicher gesetzt, wobei jeder Prozessor auf diese Bits zugreifen können mußte. Wenn beispielsweise ein Prozessor ein Betriebsmittel belegen wollte und hierzu das entsprechende Status-Bit änderte, mußten Lesezyklen von sämtlichen anderen Prozessoren durchgeführt werden, damit diese davon Kenntnis erhalten konnten, daß das betreffende Betriebsmittel nunmehr belegt ist. Bei Freigabe des Betriebsmittels mußte der gesamte Zyklus noch einmal durchlaufen werden. Derartige Status-Verwaltungsaktivitäten beanspruchten einen erheblichen Teil der Buszeit.

Mit der Erfindung ist es möglich, den Prozessoren zur gleichen Zeit und in einem erheblich kürzeren Zeitraum durch Durchführung eines erfindungsgemäßem "message passing"-Zyklus Kenntnis über die Belegung des Betriebsmittels zu verschaffen. Hierdurch ist es auch möglich, daß die Überwachungsfunktion nicht länger auf einen Master-Prozessor beschränkt ist.

Eine weitere Anwendung ist der Aufbau eines fehlertoleranten Systems, wobei jede Prozessor-Baugruppe über einen "message-passing"-Zyklus über den virtuellen Status jeder anderen Baugruppe informiert werden kann. Hierdurch kann sowohl das Versagen aufgrund von nicht-reagierenden als auch aufgrund von falsch reagierenden Baugruppen erkannt werden.

Das Echtzeitverhalten eines Multiprozessor-Systems kann erheblich verbessert werden, da auch bei beispielsweise zehn installierten Prozessorbaugruppen die Interrupt-Bearbeitung tatsächlich innerhalb eines sehr geringen Zeitversatzes von beispielsweise einer Mikrosekunde abgeschlossen sein kann, während bislang mindestens der zehnfache Zeitversatz zu erwarten war.

**Patentansprüche**

1. Verfahren zur Übertragung von Daten zwischen Baugruppen, insbesondere eines Multiprozessor-Systems, wobei die Baugruppen einen Datentransfer initiieren können und eine einen Datentransfer initiierende Baugruppe einer Mehrzahl von empfangenden Baugruppen Daten zuleitet, wobei die Adreßsignale zur Adressierung der empfangenden Baugruppe von der einen Datentransfer initiierenden Baugruppe an ein Bus-System angelegt werden, wobei eine Mehrzahl von empfangenden Baugruppen zugleich adressiert werden kann und die von der einen Datentransfer initiierenden Baugruppe abgegebenen Daten den empfangenden Baugruppen zeitgleich zugeleitet werden, dadurch **gekennzeichnet,** daß die empfangenden Baugruppen durch ein je eindeutiges Adreßsignal ansteuerbar sind, welches eine selektive Adressierung der je an dem Datentransfer beteiligten Baugruppen ermöglicht, und nach Abschluß der Datenübertragung ein Fehlerzustand über mindestens ein Fehlerrückmeldesignal der den Datentransfer initiierenden Baugruppe dann gemeldet wird, wenn mindestens eine an der Übertragung beteiligte empfangende Baugruppe einen Fehlerzustand anzeigt bzw. die erfolgreiche Übertragung der den Datentransfer initiierenden Baugruppe über mindestens ein Bestätigungsrückmeldesignal dann gemeldet wird, wenn alle an der Übertragung beteiligten empfangenden Baugruppen eine fehlerfreie Übertragung anzeigen.

2. Verfahren nach Anspruch 1, dadurch gekennzeichnet, daß das Rückmeldesignal innerhalb eines durch das Bus-System vorgegebenen Zeitrasters von jeder empfangenden Baugruppe abgegeben wird, wenn die Übertragung erfolgreich war, insbesondere nicht früher als 30 ns und nicht später als 100 ns.

3. Verfahren nach Anspruch 1 oder 2, dadurch gekennzeichnet, daß in dem Fall, daß eine empfangende Baugruppe ein Rückmeldesignal nicht oder nicht rechtzeitig abgeben kann, die empfangende Baugruppe eine Fehlermeldung in einem Register dieser Baugruppe abspeichert, dessen Inhalt von den anderen Baugruppen, insbesondere von der den Datentransfer initiierenden Baugruppe, lesbar ist.

4. Verfahren nach einem der vorhergehenden Ansprüche 1 oder 2, dadurch gekennzeichnet, daß die empfangende Baugruppe ein Fehlersignal innerhalb einer vorgegebenen Zeitspanne abgibt.

5. Verfahren nach einem der vorhergehenden Ansprüche, dadurch gekennzeichnet, daß für die Adressierung der Baugruppe nicht benötigte Adreßsignale des Bus-Systems für die Adressierung von Untereinheiten in den empfangenden Baugruppen verwendet werden.

6. Verfahren nach einem der vorhergehenden Ansprüche, dadurch gekennzeichnet, daß die den Datentransfer initiierende Baugruppe auch als empfangende Baugruppe verwendet werden kann und mindestens ein Teil der empfangenden Baugruppe auch als den Datentransfer initiierende Baugruppe verwendet werden kann.

7. Verfahren nach einem der vorhergehenden Ansprüche, dadurch gekennzeichnet, daß das Rückmeldesignal frühestens zu einem vorgegebenen Zeitpunkt abgegeben wird, insbesondere 200 ns nach einem Datentaktsignal, welches die den Datentransfer initiierende Baugruppe abgibt, nachdem sie mindestens die Adreßsignale stabil an das Bus-System angelegt hat, und daß der vorgegebene Zeitpunkt nach der vorgegebenen Zeitspanne liegt, innerhalb der die empfangende Baugruppe im Fehlerfall ein Fehlersignal abgeben kann, und die insbesondere 150 nsec lang ist.

8. Multiprozessor-System mit mindestens einer den Datentransfer initiierenden und mindestens zwei empfangenden Baugruppen, wobei die Baugruppen über ein Bus-System miteinander verbunden sind, über dessen Adreßleitungen jede adressierbare Baugruppe eindeutig ansprechbar ist, wobei die durch das jeweilige Adreßsignal angesprochene empfangende Baugruppe die auf den Datenleitungen des Bus-Systems bereitstehenden Daten liest, wobei eine Rückmeldeleitung von der empfangenden zu der den Datentransfer initiierenden Baugruppe vorgesehen ist, dadurch gekennzeichnet, daß die den Datentransfer initiierende Baugruppe mehrere Adreßsignale für das gleichzeitige selektive Ansprechen mehrerer empfangender Baugruppen an die Adreßleitungen anlegt und daß die empfangenden Baugruppen über mindestens eine gemeinsame Rückmeldeleitung in Open Collector- oder Tristate-Technik miteinander und mit der den Datentransfer initiierenden Baugruppe verbunden sind.

9. Multiprozessor-System nach Anspruch 8, dadurch gekennzeichnet, daß in den empfangenden Baugruppen Zwischenspeicher vorgesehen sind, die alle Daten innerhalb eines kurzen Zeitraums, insbesondere von 40 ns nach der Stabilisierung der Datensignale, zwischenspeichern.

10. Multiprozessor-System nach Anspruch 8 oder 9, dadurch gekennzeichnet, daß die empfangenden Baugruppen wahlweise ein Zwischenspeicher-Register, aus welchem die empfangenen Daten unmittelbar abrufbar sind, oder einen Zwischenspeicher mit mehreren Stufen, der die zuerst empfangenen Daten zuerst und die später empfangenen Daten später abgibt, aufweist.

11. Multiprozessor-System nach Anspruch 8, 9 oder 10, dadurch gekennzeichnet, daß mindestens zwei aufbaugleiche empfangende Baugruppen, insbesondere Prozessor-Baugruppen, vorgesehen sind, deren Aktivitäten durch die gleichzeitig empfangenen Datensignale synchronisiert werden.

**Claims**

1. Method of transmitting data between modules, more particularly of a multiprocessor system, the modules being capable of initiating a data transfer and a module initiating a data transfer passing data to a plurality of receiving modules, the address signals for addressing the receiving module from the module initiating a data transfer being applied to a bus system, a plurality of receiving modules being capable of being addressed simultaneously and the data issued by the module initiating a data transfer being passed simultaneously to the receiving modules, characterized in that the receiving modules are capable of being addressed by a signal unique to each module, which enables selective addressing of the modules taking part in the data transfer, and after completion of the data transmission an error status is reported by means of at least one error response signal to the module initiating the data transfer if at least one receiving module taking part in the transmission indicates an error status, and successful transmission is reported to the module initiating the data transfer by means of at least one acknowledgement response signal if all the receiving modules taking part in the transmission indicate error-free transmission.

2. Method according to claim 1, characterized in that the response signal is issued by each receiving module within a time reference defined by the bus system if the transmission is successful, more particularly not earlier than 30 ns and not later than 100 ns.

3. Method according to claim 1 or 2, characterized in that in the event that a receiving module is unable to issue a response signal or cannot issue it in time, the receiving module stores an error message in a register of this module, the contents of which are capable of being read by the other modules, more particularly by the module initiating the data transfer.

4. Method according to one of the above claims 1 or 2, characterized in that the receiving module issues an error signal within a defined period of time.

5. Method according to one of the above claims, characterized in that unneeded address signals in the bus system for addressing subunits in the receiving modules are used for addressing the module.

6. Method according to one of the above claims, characterized in that the module initiating the data transfer can also be used as the receiving module and at least a part of the receiving module can also be used as the module initiating the data transfer.

7. Method according to one of the above claims, characterized in that the response signal is issued at the earliest at a defined point in time, more particularly 200 ns after a data clock signal which the module initiating the data transfer issues after it has applied at least the address signal steadily to the bus system, and that the defined point in time is after the the defined period of time within which the receiving module may issue an error signal in the event of an error, and which is more particularly 150 nsec long.

8. Multiprocessor system having at least one module initiating the data transfer and at least two receiving modules, the modules being connected to each other via a bus system, via the address lines of which each addressable module is capable of being uniquely addressed, the receiving module addressed by the respective address signal reading the data available on the data lines of the bus system, a response signal line being provided from the receiving module to the module initiating the data transfer, characterized in that the module initiating the data transfer applies a plurality of address signals for simultaneous selective addressing of a plurality of receiving modules to the address lines and that the receiving modules are connected to each other and to the module initiating the data transfer via at least one common response signal line by means of open collector or tristate technology.

9. Multiprocessor system according to claim 8, characterized in that in the receiving modules are provided with buffer memories which store all data for a short period, more particularly of 40 ms after the data signals have stabilized.

10. Multiprocessor system according to claim 8 or 9, characterized in that the receiving modules have either a buffer register from which the received data is capable of being called directly, or a buffer with a plurality of stages which issues the data received first, first, and the data received later, later.

11. Multiprocessor system according to claim 8, 9 or 10, characterized in that at least two receiving modules of like construction, more particularly processor modules, are provided, the activities of which are synchronized by the simultaneously received data signals.

**Revendications**

1. Procédé pour transmettre des données entre des sous-ensembles, en particulier des sous-ensembles appartenant à un système multiprocesseurs, les sous-ensembles pouvant déclencher un transfert de données et un sous-ensemble déclenchant le transfert de données envoyant des données à une pluralité de sous-ensembles récepteurs, les signaux d'adresses servant à adresser le sous-ensemble récepteur étant appliqués à un système de bus par le sous-ensemble déclenchant le transfert de données, plusieurs sous-ensembles récepteurs pouvant être adressés en même temps, et les données émises par le sous-ensemble déclenchant le transfert de données étant transmises simultanément aux sous-ensembles récepteurs, caractérisé en ce que les sous-ensembles récepteurs peuvent être activés chacun par un signal d'adresses univoque respectif qui permet un adressage sélectif des sous-ensembles intéressés par la transmission de données et, après l'achèvement de la transmission de données, un état d'erreur est signalé, par l'intermédiaire d'au moins un signal d'accusé de réception d'erreur, au sous-ensemble déclenchant le transfert de données, lorsqu'au moins le sous-ensemble récepteur intéressé par la transmission indique un état d'erreur, et la transmission réussie est signalée au sous-ensemble déclencheur de transfert de données par l'intermédiaire d'au moins un signal d'accusé de réception de confirmation lorsque tous les sous-ensembles récepteurs intéressés par la transmission indiquent une transmission sans erreur.

2. Procédé selon la revendication 1, caractérisé en ce que le signal d'accusé de réception est émis par chaque sous-ensemble récepteur dans les limites d'une grille de temps prédéterminés par le système de bus lorsque la transmission a été réussie, en particulier pas avant l'écoulement de 30 ns et pas après l'écoulement de 100 ns.

3. Procédé selon l'une des revendications 1 ou 2, caractérisé en ce que, dans le cas où un sous-ensemble récepteur ne peut pas émettre un signal d'accusé de réception ou ne peut pas l'émettre en temps voulu, le sous-ensemble récepteur mémorise un message d'erreur dans un registre de ce sous-ensemble dont le contenu peut être lu par les autres sous-ensembles, en particulier par le sous-ensemble déclenchant le transfert de données.

4. Procédé selon l'une des revendications 1 ou 2 précédentes, caractérisé en ce que le sous-ensemble récepteur émet un signal d'erreur dans les limites d'un intervalle de temps prédéterminé.

5. Procédé selon l'une des revendications précédentes, caractérisé en ce que les signaux d'adresses du système de bus qui ne sont pas nécessaires pour l'adressage du sous-ensemble sont utilisés pour l'adressage de sous-unités contenues dans les sous-ensembles récepteurs.

6. Procédé selon l'une des revendications précédentes, caractérisé en ce que le sous-ensemble déclenchant le transfert de données peut être utilisé comme sous-ensemble récepteur et au moins une partie du sous-ensemble récepteur peut être utilisée comme sous-ensemble déclenchant le transfert de données.

7. Procédé selon l'une des revendications précédentes, caractérisé en ce que le signal d'accusé de réception est émis au plus tôt à un instant prédéterminé, en particulier 200 ns après un signal de rythme de données que le sous-ensemble déclenchant le transfert de données émet après qu'il a appliqué de façon stable au système de bus au moins les signaux d'adresse, et en ce que l'instant prédéterminé se place après l'intervalle de temps prédéterminé dans les limites duquel le sous-ensemble récepteur peut émettre un signal d'erreur dans le cas d'erreur et qui, en particulier, est d'une longueur supérieure à 150 ns.

8. Système multiprocesseurs comprenant au moins un sous-ensemble déclenchant le transfert de données et au moins deux sous-ensembles récepteurs, les sous-ensembles étant reliés l'un à l'autre par l'intermédiaire d'un système de bus par l'intermédiaire des lignes d'adresses duquel chaque sous-ensemble adressable peut être interpellé, le sous-ensemble récepteur interpellé par le signal d'adresses considéré lisant les données préparées sur les lignes de données du système de bus, un conducteur d'accusé de réception étant prévu pour relier le sous-ensemble récepteur au sous-ensemble déclenchant le transfert de données, caractérisé en ce que le sous-ensemble déclenchant le transfert de données applique à la ligne d'adresses plusieurs signaux d'adresses pour l'interpellation sélective simultanée de plusieurs sous-ensembles récepteurs et en ce que les sous-ensembles récepteurs sont reliés entre eux et aux sous-ensembles déclenchant le transfert de données par au moins une ligne d'accusé de réception commune dans la technique "Open-Collector" ou "Tri-state".

9. Système multiprocesseurs selon la revendication 8, caractérisé en ce qu'il est prévu dans les sous-ensembles récepteurs des mémoires intermédiaires qui mémorisent de façon intermédiaire toutes les données dans les limites d'un court intervalle de temps, en particulier d'un intervalle de 40 ns après la stabilisation des signaux de données.

10. Système multiprocesseurs selon l'une des revendications 8 et 9, caractérisé en ce que les sous-ensembles récepteurs comprennent au choix, soit un registre de mémoire intermédiaire d'où les données reçues peuvent être appelées directement, soit une mémoire intermédiaire à plusieurs étages qui émet tout d'abord les données reçues en premier lieu et, ensuite, les données reçues par la suite.

11. Système multiprocesseurs selon l'une des revendications 8 à 10, caractérisé en ce qu'il y est prévu au moins deux sous-ensembles récepteurs de même construction, en particulier des sous-ensembles processeurs dont les activités sont synchronisées par les signaux de données reçus simultanément.

FIG. 1

**FIG. 2**